(19) Europäisches Patentamt / European Patent Office / Office européen des brevets

(11) **EP 3 279 082 A1**

(12) **EUROPEAN PATENT APPLICATION**
published in accordance with Art. 153(4) EPC

(43) Date of publication:
**07.02.2018 Bulletin 2018/06**

(21) Application number: **16761131.8**

(22) Date of filing: **09.03.2016**

(51) Int Cl.:
**B64C 1/00** (2006.01)   **B64C 3/10** (2006.01)
**B64C 3/16** (2006.01)   **B64C 39/00** (2006.01)

(86) International application number:
**PCT/ES2016/000034**

(87) International publication number:
**WO 2016/142559 (15.09.2016 Gazette 2016/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.03.2015 AR P150100748**

(71) Applicants:
• **Bosio Blanco, Carlos Conrado**
  **Sabadell 08206-Barcelona (ES)**
• **Blanco, Roberto Horacio**
  **C.P. 1611 Don Torcuato Buenos Aires (AR)**

• **Klarenberg, Alejandro Jose**
  **C.P. 1611 Don Torcuato, Buenos Aires (AR)**

(72) Inventors:
• **Bosio Blanco, Carlos Conrado**
  **Sabadell 08206-Barcelona (ES)**
• **Blanco, Roberto Horacio**
  **C.P. 1611 Don Torcuato Buenos Aires (AR)**
• **Klarenberg, Alejandro Jose**
  **C.P. 1611 Don Torcuato, Buenos Aires (AR)**

(74) Representative: **Marietti, Andrea**
  **Marietti, Gislon e Trupiano S.r.l.**
  **Via Larga, 16**
  **20122 Milano (IT)**

(54) **AIRCRAFT HAVING SUPPORTING FUSELAGE**

(57)    The aircraft defines a lifting volume including at least part of the central body housing the transported payload.

Said volume has a conventional aerodynamic profile along the longitudinal direction of the aircraft, with portions of wings projecting symmetrically and transversely at both sides thereof

From the longitudinal axis said wings at each side shows corresponding first sections with negative dihedral and forward swept until reaching corresponding inflexion points from which two distal second sections or tracts projects with positive dihedral and back swept until reaching the wingtips of the projected wingspan.

Figure 6

# Description

This instant invention is primarily intended for aircraft designs whose lifting body is determined by the integration of its entire wing surface with at least part of the fuselage or bearing portion of the load, while presenting a low relationship between its wingspan and wing chord or aspect ratio.

## Scope of the present invention:

This invention provides a novel design of aircraft applicable to all kinds of airframes, in which at least part of its fuselage is integrated with the wings surface, both forming part of the whole lifting surface or lifting body; the term "fuselage" meaning the body of the aircraft that carries the payload.

## General theoretical considerations on aircraft aerodynamics:

As known, some embodiments of the aviation industry, especially in civil aviation, endeavors to achieve in a single design the following and main characteristics:

- To be able to transport the greatest possible payload in relation to aircrafts having an equivalent exterior volume;
- To carry such cargo as fast as possible, compatible with the lowest possible fuel consumption (or increased fuel efficiency);
- Achieving to cover the greatest possible distance within this optimal speed, that is, with an increased autonomy;
- To obtain the possible shortest takeoff and landing distances;
- Achieving enhance resistance to impacts or accidents in aircraft design, e.g. an increased safety factor in case of accidents;
- Provide an aircraft compact design with increased resistance to torsion and compound stress without increasing the manufacturing costs, and;
- Obtaining this construction within the lowest possible budget.

As known in the art, up to date in the design of existing aircraft several of the above said conditions are mutually exclusive owing mainly to the usually prevailing criterion while drafting airframe designs.

The variables usually considered are: the use of lighter and stronger materials, such as titanium, carbon fibers; It is also usual an endeavor to improve the consumption-power ratio of the propelling engines or improve the design aerodynamics, particularly in the design of wings profiles.

Traditional airplane designs comprise:

   • A fuselage, defining from a mechanical standpoint an internally hollow longitudinal beam which defines the aircraft's volume of cargo (payload). This part of the so-called "wet surface" provides no airlift vectors and therefore from the aerodynamic point of view, it only implies a drag of the vehicle while in transit through an air mass:

   ▪ The wing area, which is the part of the aircraft providing the airlifting vectors;

   ▪ Its maneuvering surfaces, such as the vertical and horizontal stabilizers.

Considering each of said components we may confirm that the conventional fuselages are defined as tubular bodies of relatively constant cross-section and a length in proportion to its wingspan.

The wings are born out of corresponding intersection or encounters with the fuselage body, and it is inevitable that such encounters arises turbulence and disruptions of the aerodynamic airflow. It is considered that said matching between the wings surface and the stabilizing surface with the fuselage represents 6% to 15% of the parasite resistance. In turn there is an established and accepted relationship between the span (distance between the wingtips) and the average width of the wing, i.e., the chord average. This ratio is known as "AR" for its acronym "aspect ratio" being;

$$Ar = L \, / \, C,$$

wherein "$L$" is the length between wingtips, and "$C$" is the average wing width or chord, having $Ar$ an accepted and traditional range between 5:1 to 10:1.

It should be noted that traditional airframes do not produce aerodynamic lift, i.e. they do not produce a "lift" vector and only produce resistance (drag).

While the following theoretical considerations are well known to those skilled in the art, for clarity sake of the present disclosure, their brief review is deemed appropriate.

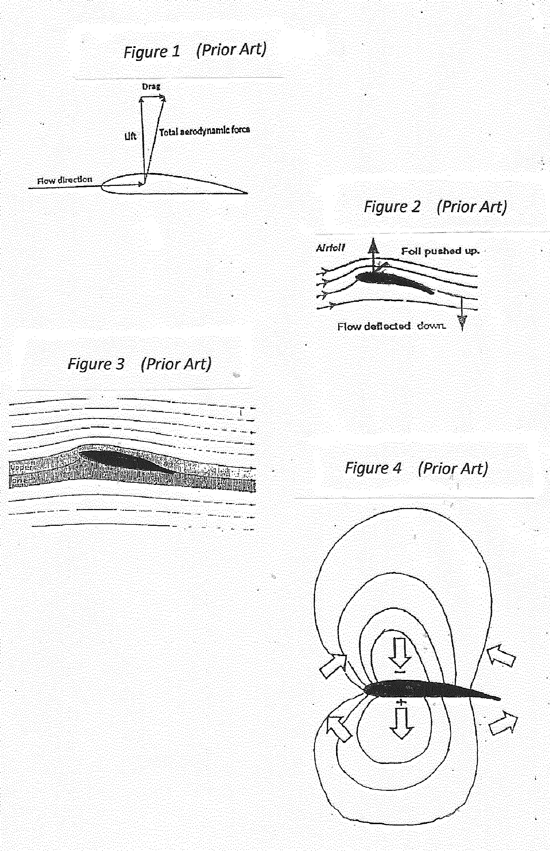

When an aircraft travels with a straight and level flight (cruise), most of the generated lift opposes to the gravity downwards pull. In the latter case, it is often used the term "aerodynamic down force". The aerodynamic lift requires a fluid's relative movement and it generally refers to situations in which the body is completely immersed in said fluid. (Please refer to Figure 1).

An aerofoil surface is capable of generating an aerodynamic lift during its passage at speed through the fluid within which is submerged, significantly providing more lift than drag. A flat plate could generate a lifting force component but not as much as an area of aerodynamic sustentation lifting body lift or aerodynamic profile, while it provides a greater drag. It is defined as "aerodynamic cross section or lifting body" the cross section of the wing or profile.

Several explanations are known detailing the reasons why a lifting body profile generates an upward vector (lift). At present it is believed that said lift is a conjunction between Bernoulli's principle and Newton's third law.

Newton's third law states that every action is countered by an equal and opposite force or reaction. Applying this law, when a lifting body deflects the air downwards, said flow of air exerts an upwards action on said lifting body. (See Figure 2).

Newton's second law (force = mass●acceleration), tells us that the lifting force exerted on a wing profile is equal to its mass●downward directed acceleration.

Bernoulli's principle states that considering a constant air flow, said air flow is accelerated when it travels through a low pressure region. There is consequently a direct relationship between pressure and speed. In a lifting body, there is a pressure imbalance due to a decreased pressure on the lifting body's upper back than on its lower surface. The airflow's streamlines divide the airflow around the lifting body in "airflow tubes" as represented by the spaces between the streamlines in Figure 3. By definition, in a steady stream a fluid never crosses the airstream lines. Assuming that the air is incompressible, the volume of the flow rate should be constant within each airflow tube since matter is neither created nor destroyed. If an airflow tube narrows, the air flow speed should increase in the narrower region to maintain constant its flow rate. This is an application of the principle of mass conservation.

Applying Bernoulli's principle, considering a wing's profile, the pressure on the upper surface, where the air flow moves faster, is less than the pressure on the undersurface of a lifting body, wherein it moves at a lesser speed. Therefore, the pressure difference creates a net upward pointing aerodynamic force vector, which is the result of the pressure differences and depends on the angle of attack of the aerodynamic lifting body profile, the air density and airspeed.

By definition, "Pressure" is the force perpendicular to the area per unit area exerted by the air on the surfaces it touches. The lifting force is transmitted through the pressure acting perpendicular to the surface of the lifting body. The air keeps physical contact with all points and the net force manifests itself as pressure differences. The direction of the net force implies the average pressure on the upper surface of the lifting body is less than the average pressure on its lower surface. These pressure differences arise in relation to the bending of air flow. Whenever a fluid follows a curved path, there is a pressure gradient perpendicular to the flow direction with a higher pressure on the outside of the curve, and a lower pressure inside it. Newton's second law derives a direct link between the curved pressure airflow lines and the pressure differences:

$$\frac{\mathrm{d}\,p}{\mathrm{d}\,R} = \rho \frac{v^2}{R}$$

The left side of this equation represents the pressure differential perpendicular to the fluid's flow on the differential of the curvature radius. On the right side of the equation, *p* is the density, *v* is the velocity, and *r* is the curvature radius.

This formula shows that increasing speeds and greater curvature grades creates enhanced pressure differences, while for a rectilinear flow (R→ ∞) the pressure differential is zero.

The leading or attack angle is the angle between a lifting body and the air flow approaching it. A symmetrical profile will generate a null elevation vector if the angle of attack has a zero value. But as a function of the increase of the angle of attack, the airflow will be deflected through a greater angle and the vertical component of the velocity of the airstream is increased, resulting in increased lifting force. As the angle of attack becomes increases, the lift reaches a maximum at a determined angle; increasing the angle of attack beyond this critical angle of attack causes the detachment of the airflow from the upper surface (stall). The climbing force is a function of the lifting body shape or profile, specifically derived from the greater convexity of the upper surface in regards to its lower surface.

If "L" is the coefficient of the lifting force or vector

$$L = \tfrac{1}{2}\rho v^2 A C_L$$

wherein:

- **CL** = Lift coefficient at a determined angle of attack.
- **L** = coefficient of the lift force,
- **P** = air density
- **v** = true air speed
- **A** = area of the wing plane

The total lifting force is the integral of the pressure forces in the perpendicular direction to the flow around the whole lifting body;
wherein:

- **p** = pressure value,
- **n** = vector unit perpendicular to the wing,
- **K** = vertical vector unit perpendicular to the airflow.

Figure 4 illustrates the pressure distribution around a lifting body. The "+" sign indicates higher pressure than the environment, and the sign "-" indicates a lower pressure. The arrows indicate the directions of block net forces on portions of fluid in different parts of the flow field.

In short: In order to maintain the pressure differential exerted by the lifting force on the lifting body requires maintaining a non-uniform pattern of pressure propagation in a wide area around the lifting body. This requires the maintenance of pressure differentials on both vertical and horizontal directions, and therefore requires having a downward directed airflow as well as changes of airflow's speed in accordance with Bernoulli's principle. Pressure differentials and changes in the flow direction and speed hold together a mutual interaction. Pressure differentials arise naturally from Newton's second law and the fact that the flow along the surface naturally follows the contours of the predominantly downward slope of the lifting body, and the fact that air has a mass factor is crucial for this interaction.

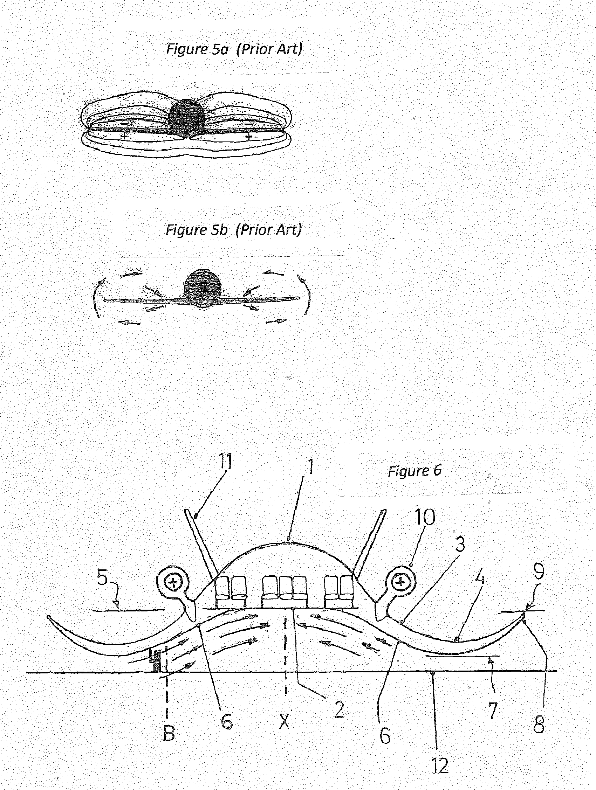

Figure 5a shows a front view of the isobaric distribution in a low wing traditional aircraft. Note how the isobars cancel each other when they meet a conventional fuselage cross section.

Figure 5b shows the velocity vectors, and its cancellation in the vicinity of the conventional fuselage cross section.

These two above said figures proves, in support of the above given brief theoretical introduction, that the traditional fuselage does not provide any lift component, and therefore is considered a resistance (drag).

Last, always considering fuselage and wings traditional designs, for wings having a moderate to high **"AR** = **L/C"** ratio, the flow at any section along the wing except near its wingtips, behaves as a flow in a bi-dimensional profile.

The lifting force tends to decrease in the direction of the span of the wing root to the wing tip and the pressure distributions around the aerofoil sections change accordingly in the direction said wing span.

**Problems found and not solved by the prior art:**

One of the problems to be solved in aircraft design is to integrate the fuselage to the wing surface, forming part of the lifting surface thereof.

Another problem to be solved is how to generate at the same time the necessary lifting force with the lesser possible aspect ratio and the lowest possible aerodynamic drag.

A further problem to be solved is that the integration of the fuselage with the wings should be achieved with harmonious encounters or meeting points without the existence of unions disrupting the vortices on the wings airflow, i.e., the lifting force should not be altered by the existence of a fuselage.

Another problem to be solved in the prior art is to ensure that the aircraft's design has a reduced compound and torsion stress

It is still another problem to be solved is channeling most of the airflow displacement rearwards and not towards the wingtips from where they escape, without contributing to the lift of the aircraft.

**Prior art analysis:**

Over the years there have been several attempts to design fuselages providing sustention forces, mainly with shape of wings, but up to date it has not been achieved the full integration of such fuselages to the wings properly generating a whole and integrated lifting surface or volume. These known designs were entirely unsuccessful since the short length of their lifting fuselages generates more induced resistance (drag) than the achieved lift benefits.

To this end, we may mention:

- USD Design 1.376.285 to Eshelman,
- The airplanes from the board of Eng. Burnelli, namely USD Design 1,509,265 or US Patent 2,572,442 A.;
- The Lifting Fuselage, US Patent 5,813,628 A;
- The Blended Wing, European Patent EP 1167183 A2.

All of these aforementioned embodiments deals with aircraft design whose fuselage is capable of providing a sustention lift, but they have the disadvantage of generating a sharp chord disruption between the flat cargo area (fuselage) and wing area itself. In these designs, the central section acts individually from the sustention point of view, with high chord and extremely low length, causing this cross section a relevant induced drag and a negative impairment of the wing efficiency of the adjoining wing on each side, no matter if these lifting sections are separated or not by fuselages acting as a endplates of the central section. In other words, these known designs omit the concept of the continuity of the lifting volume, which is one of the main objects of this instant invention.

- Also, we may mention the Horten Flying Wing design in which the fuselage merges into an aerodynamic and structural unit with the wing surface. This generates good results on the overall performance, but they have the disadvantage of not having stabilizers surfaces sufficiently distanced from the pressure center, being the aircraft controlled by combined aerodynamic brakes and ailerons generating the nod and tilt for its turning direction, but are insufficient to generate more committed maneuvers or to provide a reliable stability.

The defects found in the original flying wings were partially corrected by installing winglets (see NASA-Boeing Mini-X project plane) or artificial stability electronic controls (see project Northrop Grumman B-2 Spirit) with respect to pitch control. In these above said constructions, the short distance between the horizontal stabilizer and the pressure center implies placing an opposing force to the lift on the stabilizer, higher than desirable, and renders quite difficult the application of high lift devices. Within this family of aircraft we may mention US Patent 8,191,820 B1 (Northrop), US Patent 6,708,924 B2 (Boeing) and US Patent 5,813,628 A (Co-Flowjet).

Considering now the dihedral given to the wing at the root of the fuselages of traditional aircraft, it is observed that as well as in the flying wings concept, in order to obtain lateral stability they usually have a positive dihedral, which does not contribute to lessen the marginal loss of air vortices. Yet there have been airplanes with negative dihedral in the wing root, notably the Chance-Vought F-4U Corsair, but this WWII aircraft carrier fighter owes its "gull-wing" design primarily to the fact that same was necessary to shorten the landing gear struts in order to provide a more robust landing gear, since the power plant had a large diameter propeller. That is, the primary consideration was not the containment of the airflow displacement on the wings toward the wingtips, but rather solving a mechanical problem.

There are also high-wing aircraft with negative dihedral lateral stability achieved by the pendulum effect, as the Antonov 225 or the Boeing C17.

As we may see, it has been standardized the use of positive dihedral to achieve lateral stability in low wing aircraft designs and in no case we may find a central section with a negative dihedral to reduce marginal loss, combined with an outer zone of positive dihedral in order to provide the necessary lateral stability, and still less, integrating the wings to the fuselage, as is the case of this instant invention.

The use of forward swept wings at the wing root is to be found, e.g. in the Hansa-Jet, Grumman X-29 and Sukhoi SU-47 designs, always seeking to reduce the airflow marginal loss. Several advantages are listed on the evaluations of these latter aircraft: admission of higher angles of attack, high resistance to stall, lower takeoff run, higher climb rate, higher altitude capability and speed, apart from shorter landings. These advantages for these aircraft are achieved even without the addition of leading edge slots, which are so expensive in design, construction and maintenance. Nevertheless, also in all the above latter designs we may observe some difficulties inherent to the need of enhanced structural strength and therefore the greater weight necessary to avoid damaging torsion stress at the wingtips. Also it has been pointed out difficulties relating to instability, but in the case of these fighter planes, it does not necessarily represent a demerit but rather the opposite.

In order to overcome all the up to now mentioned drawbacks in aircraft design, this instant patent makes use of forward swept in the area providing the main sustaining forces, and where, due to the distribution of lift forces along the wingspan, most of this force is obtained, and combined same with the back swept at the ends of the wings to override the aforementioned structural and stability problems.

Some modern glider designs, such as the Schempp-Hirth Duo Discus, have a slight forward swept at the beginning of its wingspan, combined with a back swept at the ends of the wings, but it does not merge aerodynamically the fuselage volume with its wings.

Last, we may mention US Patent 808 760 782 to Boeing and US 8,157,204 of Airbus. In both cases forward swept are employed, but they are not combined with a back swept in the wings, while said wings are always intercepted by classic fuselages, whereby the above mentioned problems are not fully resolved by these two latter designs.

## Objects of this invention:

An object of the present invention it is to provide a concept of aircraft whose fuselage is integrated and fused to the actual wings lifting body in a smooth continuity both in profile and function, defining the central region composed by fuselage-wings a compression and retention zone of air vortices, providing a continuous lifting volume absent of sudden or abrupt profile or shape changes.

It is also object of this instant invention that said integrated lifting volume has at least an area aligned with the longitudinal symmetry axis defining an inner volume capable of carrying therein at least a portion, if not the total, of the transported cargo payload.

It is also object of the invention that same presents a negative dihedral and forward swept in the central area of the wing-body, achieving the reduction of the air mass displacement toward the ends of the wings, lessening its marginal loss.

It is also an object of the invention that the central area of the aircraft contributes to its sustentation in flight with the least possible disturbance as caused by a classic tubular fuselage, being in this instant design the encounters or meeting points between wing and fuselage completely harmonious and progressive in order to avoid creating turbulence by sad meetings at different speeds of dynamic fluids.

It is another object of the present invention to achieve an integrated fuselage and wing design, preserving the stability requirements already enjoyed by conventional designs, further adding thereto the ability to add high lift devices across its full range of possibilities. This is achieved by providing a proper distance between the pressure center and control surfaces as well as the adoption of a positive dihedral (lateral stability) and forward swept (directional stability) at the ends of the wings (to be compared to the traditional flying wings).

It is also an object of the invention the adoption of an overall design of a relative low aspect ratio lifting surface, with a relevant thickness and chord, through a combination of negative dihedral and forward swept in the area of maximum surface and lifting quality corresponding to the wing's area in the vicinity of the aircraft longitudinal axis.

It is also object of the invention that at least part of the lifting body trailing edge of the lifting surface is placed sufficiently distanced from the stabilizer surfaces in order to allow using high lift devices, being this obtained placing said trailing edge at the proper distance from de pressure center. (Comparison again made with regards to actual flying wings).

Is another object of the invention that integration of the wings with the central body determines the lowest possible outflow of the air flow towards the wingtips, channeling the displacement of said airflow over the lifting body towards the aircraft's end or posterior maneuvering surfaces.

It is finally an object of this invention that the total resulting lifting surface, at equal dimensions, is greater than those applied to a conventional aircraft design.

**Summary of the invention:**

**AIRCRAFT DESIGN WITH ITS LIFTING SURFACE DETERMINED BY THE WINGS SURFACE INTEGRATED WITH AT LEAST PART OF ITS FUSELAGE, GENERATING A LIFTING VOLUME WITH A LOW RELATIONSHIP BETWEEN THE WING SPAN AND THE AVERAGE**

CHORD, wherein its lifting volume includes at least part of the central body in which is housed the load to be transported, providing said volume a conventional wing profile or lifting body along the aircraft's longitudinal axis transversely extending symmetrically at both sides from said longitudinal axis (XX) with negative dihedral and forward swept towards respective areas of inflection from which projects corresponding distal second wing sections or tracts with back swept and positive dihedral up to the wingtips; changes in the condition of both dihedral and swept can be progressive with progressively negative dihedral and progressively forward swept, from a minimum value of both dihedral and swept along the longitudinal axis towards respective areas of inflection in which both the negative dihedral and forward swept starts to change in their condition, passing through a neutral angle in both dihedral and swept, from which projects respective second distal wing sections or wing tracts with positive dihedral and back swept with progressively increasing values of both positive dihedral and back swept up to the wingtips.

This lifting volume may be combined, according to convenience, with different static and dynamic stabilization systems, and diverse power plants.

**Brief review of the enclosed drawings:**

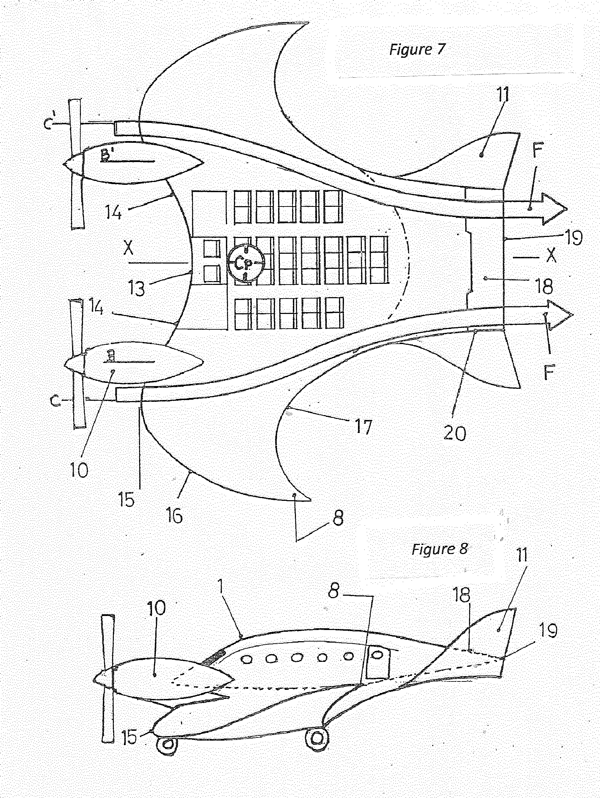

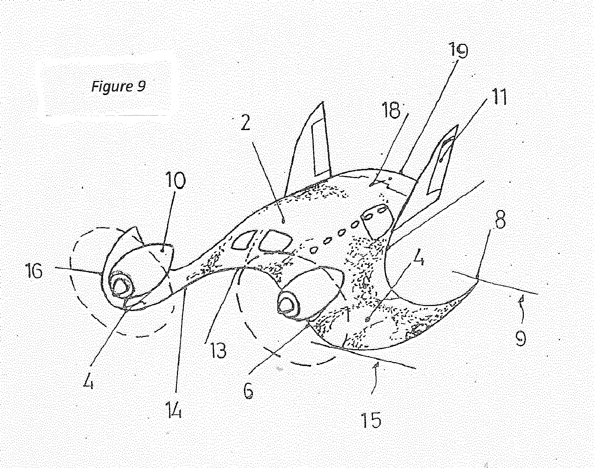

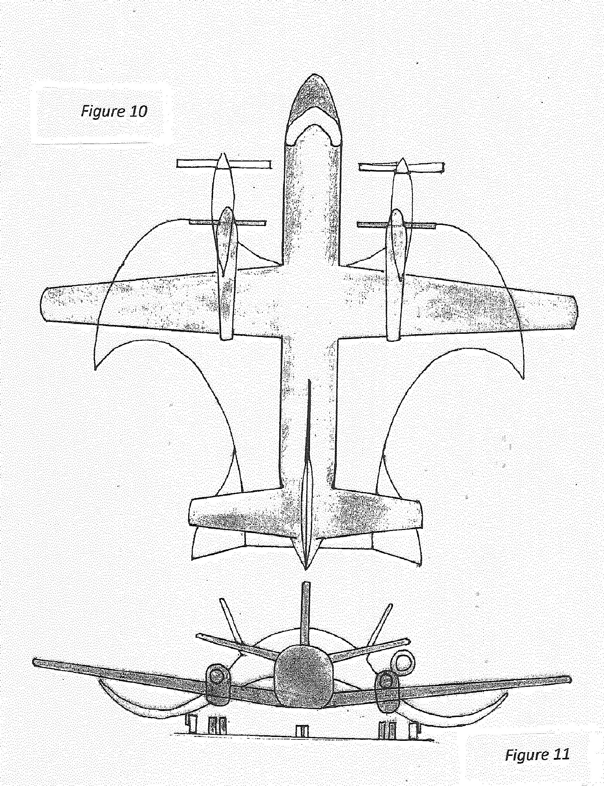

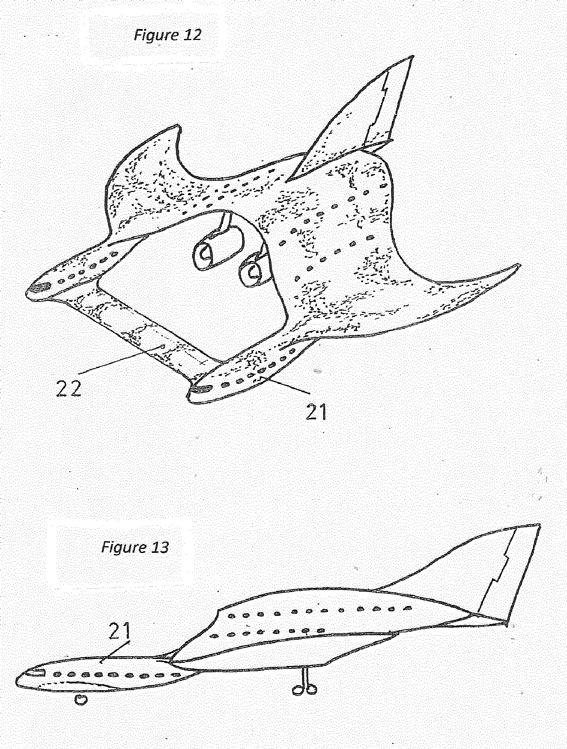

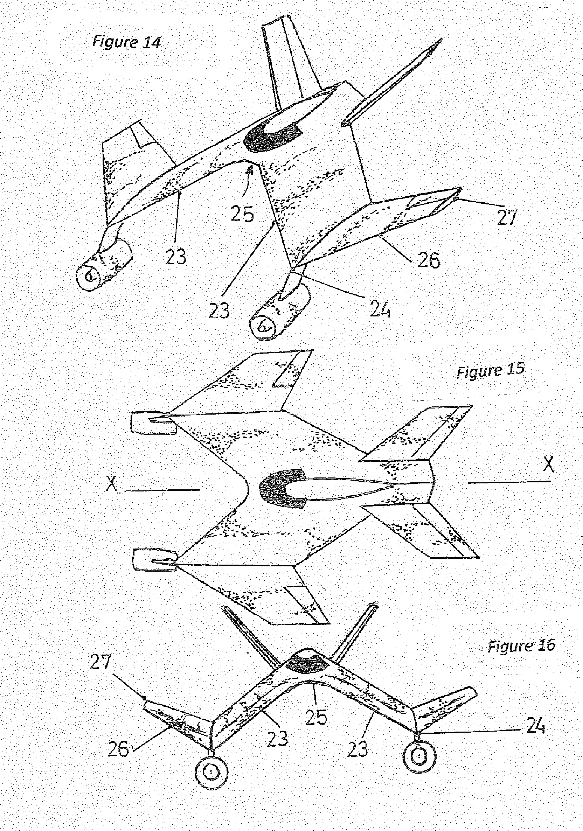

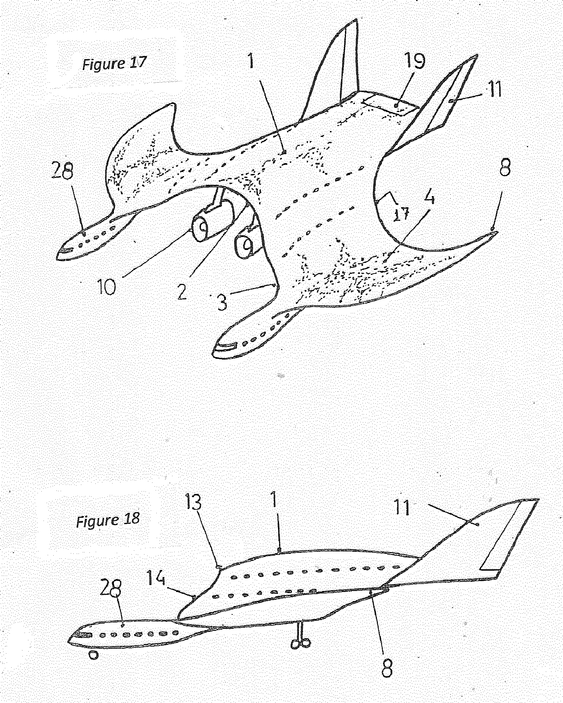

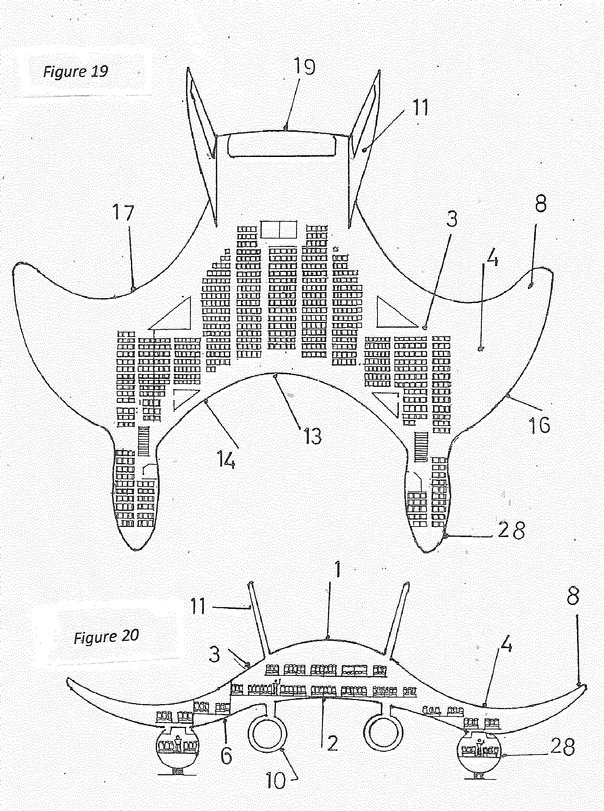

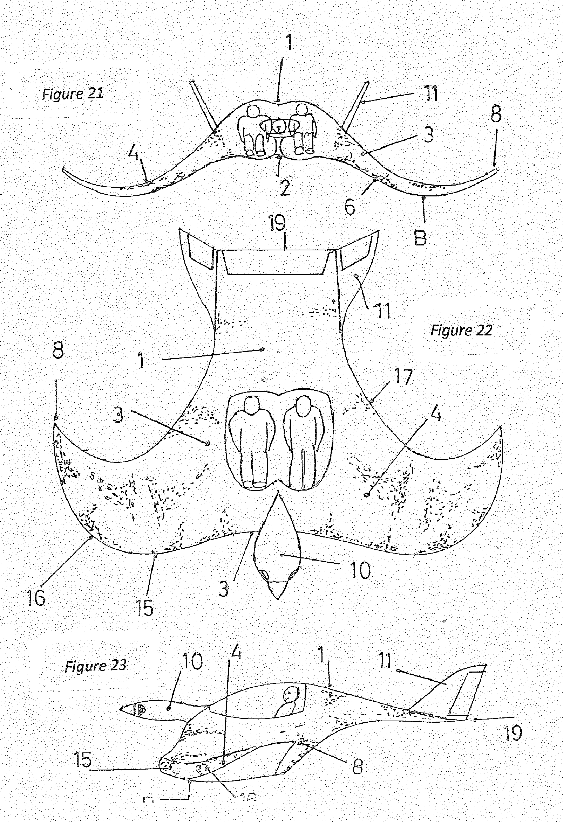

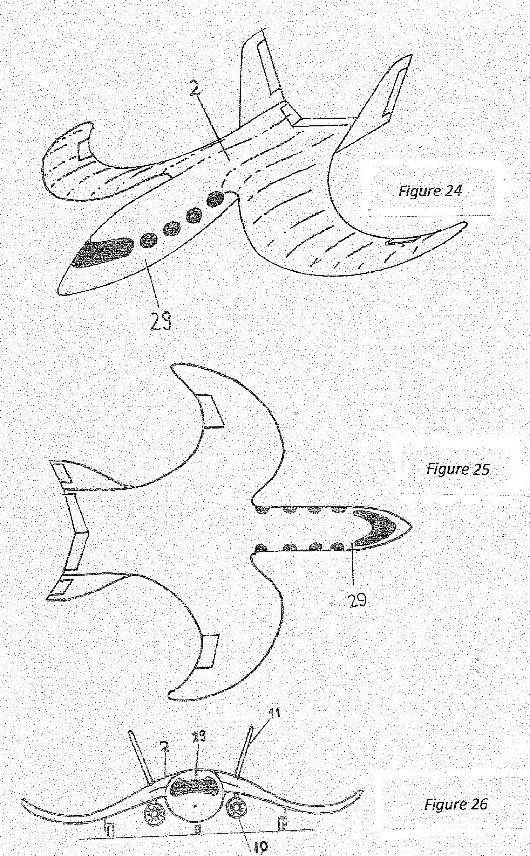

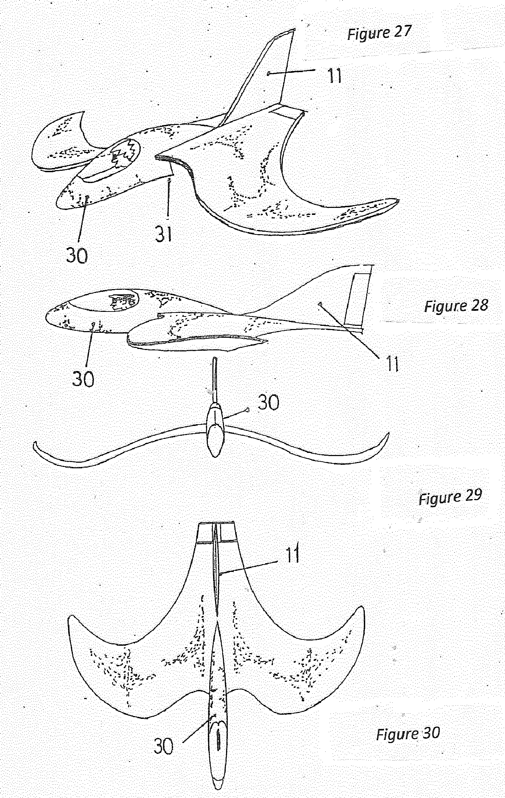

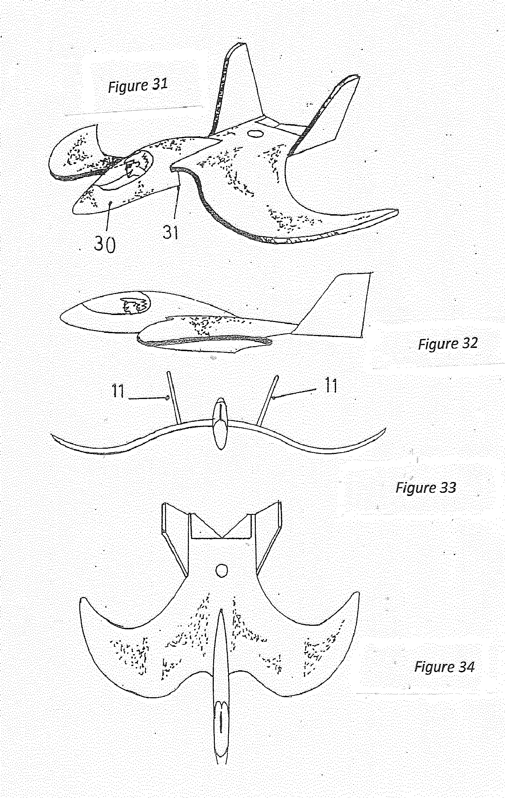

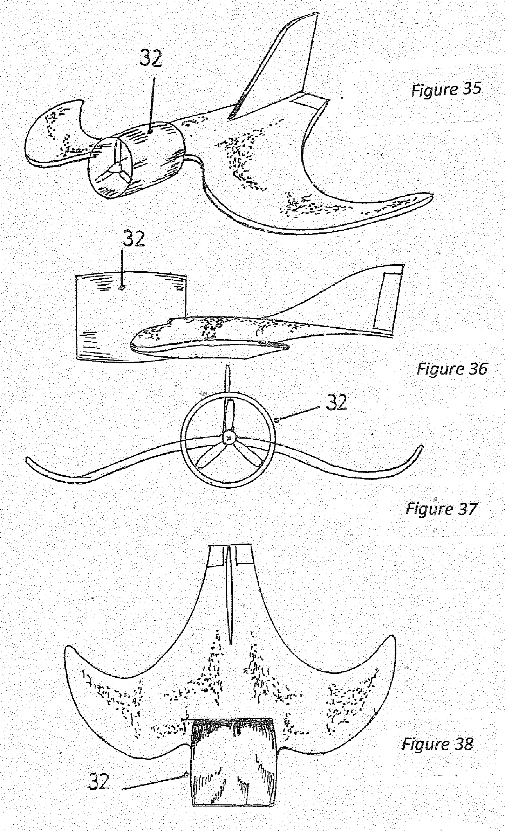

◦ Figure 1 shows a traditional conventional lifting body section, showing the acting forces (prior art);
◦ Figure 2 schematically illustrates an explanation of the lifting force by applying Newton's laws (prior art);
◦ Figure 3 explains Bernoulli's lifting applied principle (prior art);
◦ Figure 4 shows the distribution of pressures in a section of a traditional wing (prior art);
◦ Figure 5a and 5b shows the transversal cross section of a traditional aircraft (fuselage and projecting wings thereof), indicating in Figure 5a the isobars distribution, and Figure 5b depicts the velocity vectors of the ascending flow (prior art);
◦ Figure 6 shows a frontal view of one of the possible constructions of this instant invention;
◦ Figure 7 shows Figure 6 top plan view;
◦ Figure 8 shows us the design of Figure 6 in a top plan view;
◦ Figure 9 illustrates a front/upper perspective synthesizing the three previous views (Figures 6, 7 and 8);
◦ or Figure 10 shows a top view of a traditional commercial aircraft, and superimposed to it, shows one of the constructions of the present invention;
◦ Figure 11 illustrates the same set of images of Figure 10, but in a frontal elevation view;
◦ Figure 12 shows in perspective a Canard version of this invention;
◦ Figure 13 shows a lateral view of Figure 12;
◦ Figure 14 shows in perspective another embodiment of the present invention;
◦ Figure 15 illustrates the plan view of Figure 13, and
◦ Figure 16 shows the construction of Figure 13, in frontal elevation view;
◦ and Figure 17 shows a perspective view of a commercial aircraft with two symmetrical pods or elongations from its leading edge;
◦ Figure 18 illustrates Figure 17 in a lateral elevation thereof;
◦ Figure 19 illustrates Figure 17 in a top plan view;
◦ Figure 20 illustrates Figure 17 in front elevation view;
◦ Figures 21, 22 and 23 respectively shows a front elevation view, a top view and lateral projection of a two seater aircraft design of this instant invention;
◦ Figures 24, 25 and 26 teaches further constructions of the invention in which the central portion of the fuselage is projected partly in a section of a conventional fuselage;
◦ Figure 27 shows a scale aircraft, that is, a flying toy, in a perspective view of the present invention;
◦ Figures 28, 29 and 30 show respectively a side view, front view and top view of the construction of Figure 28;
◦ Figure 31 shows another scale or toy plane in, that is, a flying toy in perspective according to this present invention;
◦ Figures 32, 33 and 34 shows respectively a side view, front view and top view of the construction of Figure 31;
◦ Figure 35 shows other constructions of scale or toy airplane according to this instant invention equipped with a micro-motor on its front end;
◦ Figures 36, 37 and 38 show respectively a side view, front view and top view of the construction of Figure 35.

## Detailed description of the preferred embodiments of the present invention:

In order to achieve some of the preferred embodiments of the present invention it is attached in support of the enclosed drawings the following description thereof, which should be construed as one of the several possible constructions of the invention, hence it should not be assigned to the following description and drawings any corresponding limiting value, while it is included within the scope of protection of the invention all the possible means equivalent to those hereby illustrated, being the amplitude of this invention determined by the corresponding claims chapter in its first appended claim.

Moreover, in these figures, the same reference numerals identify like and/or equivalents means.

The aforementioned Figures 6, 7 and 8 depicts a twin turbo-propeller passenger plane according to this instant invention. In said figures reference (1) indicates the back or upper surface of the fuselage area (lifting fuselage), which in the section perpendicular to the symmetry longitudinal axis (XX) (See Figure 7), presenting a sufficient convexity to house between the same and floor (2) a passenger and cargo payload. This is achieved without resorting to a classic fuselage. Indeed, the central region flanked by the engines is part of the lifting volume showing a large thickness. Following with the analysis of this Figure 6, the lower surface or intrados (2) has a concavity radius greater than the convexity of the upper surface (1). The upper convexity (1) decreases and converges at (3) towards the lower concavity integrating the wing surface itself until it reaches a point of inflexion (B) after which it changes sign and defines a concavity (4). The intrados (2) defines a zone in correspondence with the longitudinal symmetry axis (XX) whose convexity is integrated to a horizontal tangent (5), after which it starts to descend creating a convexity (6) until it reaches a tangent (7) whose height is lower than the height of tangent (5). The upper back (extrados), starts to rise again after the concavity (4), reaching up to the wingtip (8) whose height (9) is substantially equal to the height achieved by tangent (2). In this embodiment it is noted that all merging of the surface slopes showing change of direction provides smooth curves, with a total absence of sharp encounters. This enables the integration of fuselage (1) to the wing surface, hence the fuselage now forms part of the lifting body or surface. This same Figure 6 shows that the thickness in the area near the axis of symmetry is greater than the wing of a conventional aircraft, including in the intrados (2) a tunnel effect leading to the trailing edge placed at a distance from the leading edge, resulting with horizontal stabilizer surfaces integrated to the fuselage, eliminating the need for conventional frontal surfaces. In this Figure 6 It is observed that, starting from the longitudinal symmetry axis (XX) corresponding to the greater thickness transversal section or tract of the wing-fuselage section, at both equal sides thereof both the intrados and extrados generates a progressively negative dihedral angle until beginning to diminish its negative angle, reaching at (6) a turning point at its lowest corresponding to the tangent (7), from which begins a positive upwards dihedral angle which keeps on climbing until reaching wingtips (8), wherein the tangent (9) is substantially at the same height of (2). Reference (10) indicates the power plants, which of course are generic, being (11) two vertical stabilizers. Shown in the figure by the converging cambers, a flow of the mass of air is biased towards the longitudinal symmetry axis (XX) through the adoption of a negative dihedral in that area of the wing surface counteracting the natural tendency of the air flow to displace toward the wingtips, significantly reducing the marginal loss generating a consequent increase in lift and a marked reduction in the induced drag. Inclusively, it can be construed that near the floor (12) this airflow creates a "floor" effect by the induced dynamic air cushion, allowing a number of known aerodynamic advantages in takeoff and landing situations.

In parallel it will be observed the adoption of positive dihedral in the wing's extremes, generating lateral stability. Therefore in this instant invention we have a negative dihedral in the area of maximum wing area and maximum lift (according to the distribution of this force along the wing span) and positive dihedral at the ends, where the lifting vectors and the wing surface are diminishing, but sufficient to generate the necessary stability, given the distance of the wing portion to the longitudinal axis. Figure 7 is a top plan view of the construction or design of Figure 6, which allows appreciating that this is a wing-fuselage unit with a low elongation. The leading edge of this design presents the symmetry axis (X-X), corresponding to the prow of the aircraft, a concavity (13), which extends on both sides, creating a negative camber that changes sign in (14) and turns into a convex profile projecting forward until the negative camber reaches the tangent (15) in correspondence of the tangent (7) at the dihedral change of sign (see Figure 6), from which the leading edge projects rearwards (positive camber) leading gradually to (16) until reaching tangent (9) at the end (9) of the wingtip, which is overturned backwards.

The trailing edge of the wings begins at the end (9) of the wingtips (8) presents a continuous concavity (17) that initially is projected toward the prow or nose of the aircraft, from which it continues towards the stern of back end of the aircraft, ending at (20) substantially parallel the symmetry axis (XX).

The rear end (18) of the upper back (19) ends substantially flattened at trailing edge (19) straight and perpendicular to axis (XX), allowing the organic employment of elevators. Drifts or tail rudders (11) are placed in the area (20); this embodiment has two tail rudders (11) and the arrows F shows the air flow moving along the axis (XX) with a tendency towards the axis of symmetry, through the negative camber in the middle section, and with the further effect, in the trailing edge, to surround said tail rudders, which increases functionality the maneuver capabilities.

Translating this into aeronautic language, the sustaining volume presents a forward sweep from 0° at the longitudinal axis to a point (14) from which begins to diminish its negative value, passing through 0° in C, becoming positive back sweep angle towards the ends up in the wingtips where the back-sweep angle is maximum. Parallel to the above mentioned with regards to the dihedral in Figure 6, it is also adopted a forward sweep in the area of maximum sustaining surface and sustaining quality of the whole lifting body, generating a tendency for the airflow to converge towards the longitudinal axis, thereby increasing the lift by decreasing the marginal loss. At the same back-sweep is adopted adjacent to the wingtips in order to improve the steering stability and to eliminate the structural difficulties mentioned while dealing in prior art analysis on the wings having progressive sweep up to the wingtips.

Analyzing simultaneously Figures 6 and 7 it is allowed to theorize that the air vortices generated by the convex dome (1) are routed back and discharged through (18), embracing laterally the rudders (arrows "F") while the airflow channeled through the concavities (4) at the wings can surround the same rudders from the surface opposite to the one previously mentioned, ensuring excellent the maneuverability of the aircraft. Figure 9 illustrates all the novel aspects above mentioned: it is observed the leading edge (13) in the central and axial convexity, followed by a gradual forward increase (14), while the dihedral progresses downward at (6). The leading edge develops forward until it reaches tangent (15) perpendicular to the symmetry axis XX, which is also the tangent point (7) of Figure 6 and then gradually rises until it reaches wingtips (8) and simultaneously turns towards back at (16). We will also observe how the rudders (11) will channel the airflow over the elevator surfaces (18). Also, the structure has an enhanced torsion resistance module with respect to the current aircraft designs due to warp of the wing's surfaces, allowing alleviating the resistant structure with obvious cost benefits.

Expressed the above in aeronautical language, we will observe the complete integration of the payload area (fuselage), in form and function, to the wing area itself and the combination of dihedral and forward sweep in the central area of the aircraft to counteract marginal loss which would be generated in a standard wing surface, against the low elongation which displayed by the design of this instant invention.

It will be also observed how combining positive dihedral and positive camber at the ends of the sustentation surface generating the required lateral and directional stability and reducing the structural stress itself which otherwise is present in wing designs with negative camber towards the wingtips.

Figures 10 and 12 shows the shaded profile of a traditional commercial aircraft, namely the profile of a SAAB 340 a 35 passenger twin turbo-prop aircraft, depicted solely for exemplary purposes, and overlaying this, we have depicted the top view and frontal silhouette of a twin turbo-propeller passenger according to this instant invention. It to be noticed that the equivalent silhouette according to the design of this invention is smaller the SAAB 340, but offers twice the lifting body area, with the possibility of increasing the load and simultaneously reducing the stall speed and achieving a wider cabin distribution.

Figure 11 shows that the size of the aircraft of the invention is smaller than the wing span of a conventional commercial aircraft.

It is particularly observed in the comparison between the two set of overlapping overload figures, that the horizontal rudder controlling the aircraft's pitch movement is integrated to the fuselage tail, thus reducing the front surface, hence the frontal drag or resistance is diminished.

It is also noted that both designs the stabilization surfaces are placed at an equivalent distance from the aircraft pressure center, as opposed to what happens with the flying wings designs mentioned in the prior art.

Figure 12 shows a Canard version of the invention, in which the main sustaining surface holds inside it the cargo space or passage accommodations. Also from leading edge of the sustaining volume of this design arises two fuselages (21) in turn acting as "pods" supporting the Canard (22) horizontal stabilization surface. Unlike the constructions of the invention up to now above described, in this instant construction it can be seen that the main lifting body does not need the stabilizing extension that arises from the trailing edge of middle zone depicted in the previous embodiments and may be further appreciated a cleaner wing-fuselage volume integrated to the main sustention surface. In this construction the vertical stabilizer is represented by a single flat plane positioned on the longitudinal axis of the sustention surface and positioned at the maximum distance from the pressure center optimizing its stabilizing capacity.

Figure 13 shows Figure 12 in a lateral elevation view.

In the above constructions of this instant invention up to now described we may observe the existence of elements protruding from the leading edge needed to generate the static longitudinal balance. Depending on each case needs, such as installed power plants, and the cargo or passenger carrying volumes, it will be important taking care to reduce as much as possible the aerodynamic interference on the lifting body. It is understood that for the best use of the virtues given by the features according to this invention, it is desirable these elements are placed, as in the depicted constructions, in the position where, due to forward sweep, the lifting surface is more advanced. This creates the added benefit of keeping unchanged the maximum lift area which is the central portion, including the fuselage integrated to the wing.

In the embodiment according to Figures 14, 15 and 16 it can be observed a single-seat aircraft, with its cockpit and fuselage integrated the supporting surface of the wing. This integrated fuselage is continued by a first portion (23) of negative dihedral and forward sweep with a constant slope from the longitudinal axis X-X up to a point (24) located below the bottom (25) of the fuselage.

After reaching (24), the wing abruptly becomes positive and the sweep turns back at (26) until reaching wingtip (27) substantially placed at the same height of (25) wherein the positive dihedral at (26) is also constant. According to our wind-tunnel tests the fact that the dihedral and sweep changes of the wings are abrupt and non-progressive, decreases the performance of the aircraft, but this cannot be ruled out since for specific problems, such as for stealth aircraft and high speed military aircraft, for example supersonic aircraft, or simply for lowering the structural cost, this latter embodiment has its advantages.

The construction of Figure 17 shows the perspective view of a large frame aircraft, in which to offset the center of gravity and pressure center that are herein displaced towards its tail, it is provided with two pods (28). Figure 18 illustrates the same construction in a side elevation view.

Figure 19 shows the same above embodiment in an upper view, detailing one of the possible seating arrangements, while Figure (20) shows the same in a front elevation.

In this construction it may be observed the additional advantage of placing the power plants near the longitudinal axis in the space generated by the negative dihedral at the central portion of the aircraft, with the well known advantage given by this feature arrangement in a power plant failure situation at any of said power plants or engines. Figures 21, 22 and 23 show three views of a small plane achieved with the same principles of the invention as set forth, using its engine (10) as a counterweight to offset the backwards displacement of the center of gravity.

The construction of Figure 24 allows us to appreciate an "executive" airplane design or a medium-sized aircraft, which has in its symmetry axis X-X a conventional fuselage as a forward extension (29), twinned to the airfoil according to this invention; the rear portion of the fuselage (29) is integrated to the lifting portion according to the invention. Figure 25 shows the top view of Figure 24, while Figure 26 shows its front elevation. In the latter figures the two turbines (10) are placed under the shown concavity provided by the wing and fuselage.

So far it has been explained and exemplified aircraft of various types, from single-seater, two-seater, business jets and large airframe jumbo aircraft. However, from the aerodynamic point of view the present invention also finds application in the field of toys or scale flying models having all the same above outlined characteristics, with the exception that the chord thickness can be uniform for constructive reasons, conformation and weight of the materials used.

Figure 27 illustrates a perspective view of a scale model in with a substantially flattened fuselage portion (30) having at its lower edge, mainly at the aircraft centre of gravity, a step (31) whose purpose is to engage an elastic element providing the propelling force, such as an elastic band. (Not shown).

Figures 28, 29 and 30 respectively show a front side view and a top plan view of Figure 27.

Figure 31 shows another embodiment of a flying scale model construction or flying toy in a perspective view showing twin rudder fins (11), while Figures 32, 33 and 34 respectively depicts its side elevation, front and top views.

Figure 35 shows in perspective a scale flying model according to this invention endowed with a motor (32) in its central portion, which on one hand allows balancing the centre of gravity of the aircraft, while at the same time driving the air through the concavity aligned with the longitudinal symmetry axis. Figures 36, 37 and 38 respectively illustrate its side elevation view, front and plan view of the construction of Figure 35.

In short, the object of this invention is to provide aircraft designs that may have most, if not, its total payload distributed within the lifting body eliminating the need to employ traditional fuselages which are internally hollow structures that offers an aerodynamic drag. The present invention covers the wing design of low aspect ratio and thus larger chord, and thanks to a combination of negative dihedral and forward sweep in the central portion of the aircraft, with an inflexion point placed at a lower height to the center of the aircraft where both sweeps turns backwards and the dihedral turns positive and then affecting a growth gradient with positive slope and camber until reaching the wingtips, it provides a far greater flying performance in comparison to the one obtained by traditional design aircrafts.

Further, it is obtained a dramatic reduction of frontal area and immersed surface due to the absence of a fuselage proper, thus reducing the resistance generated in the union of wings and traditional maneuvering surfaces to a conventional fuselage, providing lighter and more compact structures with an enhanced torsion module.

## Claims

1. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD. characterized in that** the lifting volume includes at least part of the central body holding the load to be transported, determining said lifting volume a conventional wing profile in the longitudinal direction of the aircraft; said wing profile projects symmetrically along its transversal axis from said longitudinal axis (xx) (FIGURES 6 TO 9) determining corresponding first wing sections or tracts with negative dihedral (6) and forward sweep (13), until reaching corresponding points of inflection (C) from which each wing is continued by respective second distal wing sections or tracts each having a positive dihedral (4) and back sweep (16) up to the wingtips (8) ends of the wingspan;

2. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1, **characterized in that** the lifting volume includes at least part of the central body holding the payload to be transported, determining said lifting volume a conventional wing profile in the longitudinal direction of the aircraft, while in its transversal direction it projects from the longitudinal axis (XX) symmetrically on both sides of said volume with progressively negative dihedral (6) and progressively negative sweep starting from a minimum value, at said dihedral as well as sweep at its longitudinal axis until reaching corresponding inflexion zones (C) from which both the dihedral and the sweep begins to decrease in its negative condition passing from a transition given by a neutral tangent (7) starting from which corresponding distal wing tracts are projecting with both progressively positive dihedral and sweep until reaching the wing tips.

3. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1 and 2, **characterized in that** said central portion defines a portion of the fuselage integrated to the wings surface which central part thereof attains its maximum chord contains extended in its trailing edge de control horizontal and vertical stabilization surfaces.

4. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1 and 2, **characterized in that** said lifting volume includes fuselage extension portions or gondola projected forwards and before de wing's'leading edge, containing with said gondolas payload, engines or passengers.

5. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BE-** TWEEN THE WING SPAN AND THE AVERAGE CHORD according to claim 4, **characterized in that** said fuselage extensions or gondolas are joined together by a plane surface in a canard configuration placed before and in front of the wing's leading edge.

6. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1, **characterized in that** said first wing sections or tracts (23) of negative dihedral and negative forward sweep according to the aircraft's longitudinal axis (X-X) are straight surfaces with strait edge forming inflexion edges with the corresponding wing second distal sections, of positive dihedral and back sweep (26) which are also straight planes, being the leading and trailing edges of linear and straight configuration (Figures 14 to 18).

7. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1, **characterized in that** starting from leading edge of the lifting volume it extends placed before the wing's leading edge a forward portion of conventional fuselage (29) (Figuras 24, 25 and 26) according to the longitudinal axis (X-X).

8. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1, **characterized in that** on its rear tail end or stern the aircraft it has two fins.

9. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1, **characterized in that** on its rear tail end or stern the aircraft it has a single fin.

10. **AIRCRAFT PROVIDED WITH a LIFTING SURFACE DETERMINED BY THE WINGS SURFACE INTEGRATED WITH AT LEAST PART OF ITS FUSELAGE, WITH A LOW RELATIONSHIP BETWEEN THE WING SPAN AND THE AVERAGE CHORD** according to claim 1, **characterized in that** the above described aircraft defines a scale model flying object having a central portion of fuselage which in adjacencies of its centre of gravity has a step which defines a stop against which rests an elastic element defining an aircraft driver.

Figure 1 (Prior Art)

Figure 2 (Prior Art)

Figure 3 (Prior Art)

Figure 4 (Prior Art)

*Figure 5a  (Prior Art)*

*Figure 5b  (Prior Art)*

*Figure 6*

*Figure 7*

*Figure 8*

Figure 9

Figure 10

Figure 11

Figure 12

22

21

Figure 13

21

Figure 14

Figure 15

Figure 16

Figure 17

Figure 18

EP 3 279 082 A1

Figure 19

19

11

17

8

3

4

13

14

16

28

1

11

Figure 20

3

8

4

6

2

10

28

20

Figure 21

Figure 22

Figure 23

Figure 24

Figure 25

Figure 26

*Figure 27*

11

31

30

*Figure 28*

30

11

30

*Figure 29*

11

30

*Figure 30*

Figure 31

30    31

Figure 32

11    11

Figure 33

Figure 34

Figure 35

Figure 36

Figure 37

Figure 38

# INTERNATIONAL SEARCH REPORT

| International application No. |
| --- |
| PCT/ES2016/000034 |

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
B64C

Documentation searched other than minimum documentation to the extent that such documents are included in the fields searched

Electronic data base consulted during the international search (name of data base and, where practicable, search terms used)

EPODOC

**C. DOCUMENTS CONSIDERED TO BE RELEVANT**

| Category* | Citation of document, with indication, where appropriate, of the relevant passages | Relevant to claim No. |
| --- | --- | --- |
| Y | US 2010/0163670 A1 (DIZDAREVIC et al.) 01/07/2010; paragraphs [0044] - [0045], [0060], [0084] - [0085], [0092] - [0093], [0124], [0149], [0164] - [0169], [0183], [0200]; figures 1A - 5C, 9A - 10C. | 1-4, 7-9 |
| Y | US 1109893 A (YOUNG) 08/09/1914; page 2, line 108 - page 6, line 76; figures 9 - 21. | 1-4, 7-9 |
| Y | US 3625459 A (BROWN) 07/12/1971; the whole document. | 1-2, 6 |
| Y | GB 187318 A (HOLLE et al.) 16/10/1922; the whole document. | 1-2, 6 |
| A | US 2011/0121130 A1 (ODLE et al.) 26/05/2011. | |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 18/05/2016 | **(24/05/2016)** |

| Name and mailing address of the ISA/ | Authorized officer |
| --- | --- |
| OFICINA ESPAÑOLA DE PATENTES Y MARCAS Paseo de la Castellana, 75 - 28071 Madrid (Spain) Facsimile No.: 91 349 53 04 | L. Dueñas Campo Telephone No. 91 3495342 |

Form PCT/ISA/210 (second sheet) (January 2015)

## INTERNATIONAL SEARCH REPORT

| | International application No. |
|---|---|
| | PCT/ES2016/000034 |

**C (continuation).** DOCUMENTS CONSIDERED TO BE RELEVANT

| Category * | Citation of documents, with indication, where appropriate, of the relevant passages | Relevant to claim No. |
|---|---|---|
| A | US 1818519 A (YOUNG) 11/08/1931. | |
| A | US 1818520 A (YOUNG) 11/08/1931. | |

Form PCT/ISA/210 (continuation of second sheet) (January 2015)

## INTERNATIONAL SEARCH REPORT

Information on patent family members

International application No.

PCT/ES2016/000034

| Patent document cited in the search report | Publication date | Patent family member(s) | Publication date |
|---|---|---|---|
| US 2010/0163670 A1 | 01.07.2010 | US2010224735 A1<br>US7854409 B2<br>US7793884 B2 | 09.09.2010<br>21.12.2010<br>14.09.2010 |
| US 1109893 A | 08.09.1914 | NONE | |
| US 3625459 A | 07.12.1971 | NONE | |
| GB 187318 A | 16.10.1922 | NONE | |
| US 2011/0121130 A1 | 26.05.2011 | US8366050 B2<br>WO2011062677 A1<br>EP2501611 A1 | 05.02.2013<br>26.05.2011<br>26.09.2012 |
| US 1818519 A | 11.08.1931 | NONE | |
| US 1818520 A | 11.08.1931 | NONE | |

Form PCT/ISA/210 (patent family annex) (January 2015)

**INTERNATIONAL SEARCH REPORT**

International application No.

PCT/ES2016/000034

## CLASSIFICATION OF SUBJECT MATTER

*B64C1/00* (2006.01)
*B64C3/10* (2006.01)
*B64C3/16* (2006.01)
*B64C39/00* (2006.01)

Form PCT/ISA/210 (extra sheet) (January 2015)

**REFERENCES CITED IN THE DESCRIPTION**

**Patent documents cited in the description**

- US 1376285 A, Eshelman
- US 1509265 A
- US 2572442 A
- US 5813628 A
- EP 1167183 A2
- US 8191820 B1
- US 6708924 B2
- US 808760782 B
- US 8157204 B